# EUROPEAN PATENT APPLICATION

(11) **EP 1 868 092 A1**
(43) Date of publication of application: **19.12.2007**
(21) Application number: 06730510.2
(22) Date of filing: 29.03.2006
(51) Int. Cl.: G06F 9/48, H04M 1/00

(54) **MOBILE TERMINAL**

(30) Priority: 29.03.2005 JP 2005095427
(71) Applicant: MATSUSHITA ELECTRIC INDUSTRIAL CO., LTD., Osaka 571-8501 (JP)
(72) Inventor: SOEJIMA, Hirokazu c/o Matsushita El. Ind. Co. Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/306562
(87) International publication number: WO 2006/104217

(57) **Abstract**

To provide a portable terminal having a macro function which poses a little burden on a user at the time of performance of a macro function.

A macro generation section 160 generates a macro (information showing a round of operation procedures of a portable terminal), and stores the macro into a storage section 150. An event generation section 161 defines an event which is to serve as an impetus for performance of a macro and registers the event into the storage section 150. An event/macro association generation section 162 generates an association table for associating a registered event with a registered macro, and registers the association table into the storage section 150. When an event which is to serve as an impetus has arisen, a macro execution section 163 automatically performs processing of a portable terminal according to a round of operation procedures represented by a macro corresponding to the event, by reference to the association table.

## Description

### <Technical Field>

The present invention relates to a portable terminal having a macro function.

### <Background Art>

A macro means information showing a series of procedures for operating a computer, such as a portable terminal or the like. In a portable terminal having a macro function, a macro has been previously registered (stored) in memory of a computer, and the macro is later called from the memory, to thus enable easy performance of a series of operation of the computer.

Software for adding a macro function to a computer, such as a portable terminal or the like, is generally known. For instance, a proposal to impart a macro function to a portable radio telephone terminal (i.e., a so-called portable cellular phone) has already been produced (see Patent Document 1).

According to Patent Document 1, a portable radio telephone terminal is equipped with a macro key, and information about a series of processing operations; for example, operations for reading a phone number to originate a call or the like, has been previously stored in memory in association with the macro key. A user of the portable radio telephone terminal operates the macro key as necessary, to thus call the macro.

As described in Patent Document 1, a macro function which enables automatic performance of a series of operations of a portable terminal has hitherto been available. However, macro processing (i.e., processing to be performed by the portable terminal in accordance with a macro) is still performed under the impetus of operation of a specific key performed by the user of the portable terminal.

Specifically, macro processing is not executed unless the user of the portable terminal operates a specific key. For instance, when the user cannot use a portable terminal during a meeting or when the user is sleeping in a bed, macro processing cannot be executed.

Especially, a recent portable radio telephone terminal among various portable terminals has, e.g., an electronic mail (hereinafter described as an "electronic mail" or simply abbreviated as a "mail") function, a data communications function, a game function, and the like, as well as a communication function. Thus, the portable radio telephone terminal has become multifunctional and used in a variety of scenes regardless of private scenes or business scenes.

Therefore, since the user of the portable terminal is requested to perform various operations according to each of scenes, respective operations are registered as macros. Accordingly, the number of (types of) macros to be registered inevitably increases, and hence a burden on the user; that is, a necessity of the user operating a specific key in order to perform macro processing in each scene, is increasing.

Patent Document 1: JP-A-8-293908

### <Disclosure of the Invention>

### <Problem that the Invention is to solve>

The present invention has been conceived in light of circumstances of the related art and aims at providing a portable terminal having a macro function which poses a light burden on the user at the time of performance of macro processing.

### <Means for Solving the Problem>

A portable terminal of the present invention corresponds to a portable terminal having a macro function, comprising:
a storage section;
a macro generation section which generates a macro as information showing a round of operation procedures of the portable terminal and which registers the macro into the storage section;
an event generation section which generates an event serving as an impetus for the round of operation procedures and which store the event into the storage section;
an event/macro association generation section for generating event/macro association information for use in associating the registered event with the macro and storing the event/macro association information into the storage section; and
a macro execution section for, when the registered event has arisen, automatically executing a round of operation corresponding to the event by reference to the event/macro association information.

In the portable terminal of the present invention configured as mentioned above, a predetermined event (e.g., receipt of a voice call or an electronic mail, opening or closing of a housing of a portable terminal, a display of a necessity for recharging, and the like) and a macro are stored in an associated manner as event/macro association information in a storage section. In reality, when an event has arisen, a round of operations of the portable terminal represented by a macro corresponding to the event are automatically performed. As a result, a round of operations of the portable terminal desired by the user can be performed promptly without imposing a burden on the user according to a scene of utilization of the user's portable terminal. Unrestricted customization of a macro function becomes feasible, so that user's convenience is enhanced. For instance, when a mail has arrived during duty hours, the portable terminal may also be set in such a way that a mail to the effect that "since I am on duty now, a reply will be sent at night or a subsequent time" is automatically returned. Moreover, for instance, the portable terminal may also be set in such a way that an incoming call having arrived while the user is in bed is instantaneously received and interrupted as a counteractive action against one-ring phone scams or such that an inquiry is automatically made at a center as to whether or not a message is left when a housing of the portable terminal of collapsible type is opened.

In one mode of the portable terminal of the present invention, the storage section is internal memory of the portable terminal or auxiliary memory removably attached to the portable terminal.

One mode of the portable terminal of the present invention is to previously register a macro in internal memory of a portable terminal or auxiliary memory (e.g., a card-type memory or the like) removably attachable to a portable terminal without the help of external equipment, such as an external computer or the like; and to enable execution of the macro in only the portable terminal. As a result, the convenience of the portable terminal is enhanced.

Examples of the portable terminal of the present invention include portable information terminals such as a portable personal computer (e.g., a personal computer of notebook type), a PDA (i.e., Personal Digital Assistance), a portable radio telephone terminal (i.e., a so-called portable cellular phone), and the like. It is particularly preferable that the portable terminal of the present invention corresponds to a portable radio telephone terminal having become extremely pervasive in the world in recent years.

Specifically, when the portable terminal of the present invention is a portable radio telephone terminal, a macro and an event can be freely associated with each other, and a variety of macros can be executed in accordance with the use scene (i.e., unrestricted programming of a macro in the portable radio telephone terminal). Consequently, the portable radio telephone terminal can be individualized (i.e., customized) in accordance with the user, whereby the ease of use of the portable radio telephone terminal is enhanced.

### <Advantage of the Invention>

As above, according to the present invention, when a predetermined event, such as receipt of a voice call or an electronic mail, opening/closing of a housing of a portable terminal, a display of a necessity for recharging, or the like, has arisen, processing of the portable terminal is automatically performed with the impetus of that event in accordance with a round of operation procedures represented by a macro corresponding to the event. Accordingly, efforts to create, at the time of execution of macro processing, an impetus therefor through specific key operation can be saved, whereby a burden on the user of the portable terminal is lessened. According to the present invention, the ease of use of a macro function is enhanced to a much greater extent.

### <Brief Description of the Drawings>

Fig. 1 is a system block diagram showing an example hardware configuration of a portable terminal of the present invention.
Fig. 2 is a system block diagram showing the configuration of a functional block required to implement a macro function of the portable terminal of the present invention.
Fig. 3 is a flowchart showing procedures under which a macro generation section automatically generates a macro.
Fig. 4 is a flowchart showing procedures under which an event generation section generates a trigger event.
Fig. 5 is a flowchart showing event/macro association processing procedures of an event/macro association generation section.
Fig. 6 is a flowchart showing procedures under which a macro execution section automatically executes macro processing associated with an event.
Fig. 7 is a view for describing an example event table preset in a storage section and processing procedures employed when a predetermined trigger event is defined by use of the event table.
Fig. 8 is a view for describing an example event table preset in the storage section and processing procedures employed when a predetermined trigger event is defined by use of the event table.
Fig. 9 is a view showing an example macro table registered in the storage section.
Fig. 10 is a view showing an example trigger event table registered in the storage section.
Fig. 11 is a view showing an example event/macro association table registered in the storage section.
Fig. 12 is a view for describing principal procedures employed in an example of automatic execution of macro processing.
Fig. 13 is a view for describing principal procedures employed in another example of automatic execution of macro processing.
Fig. 14 is a front view showing an example external configuration of a portable terminal (specifically a portable radio telephone terminal of straight type) of the present invention.
Fig. 15 is a perspective view showing an example external configuration of a portable terminal (specifically a portable radio telephone terminal of collapsible type) of the present invention.

### <Descriptions of the Reference Numerals>

- 100: TELEPHONY PROCESSING SECTION
- 110: VOICE INTERFACE
- 120: INPUT/OUTPUT INTERFACE
- 122: SPEAKER
- 123: INPUT SECTION
- 124: LIQUID-CRYSTAL DISPLAY SECTION
- 130: CONTROL SECTION
- 140: HALL ELEMENT
- 150: STORAGE SECTION
- 151: RAM
- 152: ROM
- 153: AUTOMATIC OPERATION PROGRAM
- 154: MEMORY INTERFACE
- 155: MEMORY CARD
- 160: MACRO GENERATION SECTION
- 161: EVENT GENERATION SECTION
- 162: EVENT/MACRO ASSOCIATION GENERATION SECTION
- 163: MACRO EXECUTION SECTION
- 300, 306, 400: EVENT TABLE
- 700: SPEAKER
- 701: LIQUID-CRYSTAL DISPLAY
- 702: OPERATION KEY
- 703: RECEIVER
- AN: ANTENNA

### <Best Mode for Implementing the Invention>

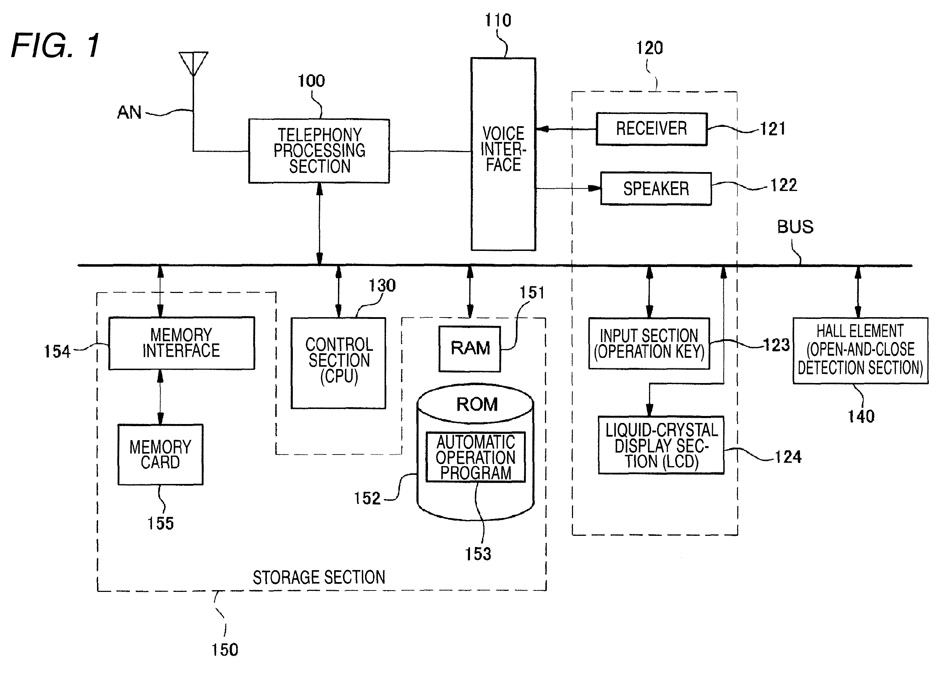

A preferred embodiment pertaining to a portable terminal of the present invention will be described hereinbelow by reference to Figs. 1 through 15. Herein, a portable radio telephone terminal which has recently come into extremely-wide use in the world is described as an embodiment of a portable terminal of the present invention.

Fig. 1 is a system block diagram showing an example hardware configuration of a portable radio telephone terminal of the present invention.

As shown in Fig. 1, this portable radio telephone terminal comprises an antenna AN; a telephony processing section (this is a section for implementing a telephony function) 100; a voice interface 110; an input/output interface 120; a storage section 150; and a control section (i.e., a CPU: Central Processing Unit) 130 for comprehensively controlling operations of respective sections. Further, this portable radio telephone terminal has a hall element 140 as a open-and-close detection section which is employed only when the terminal is of a collapsible type.

The input/output interface 120 has a receiver 121, a speaker 122, an input section (operation key) 123, and a liquid-crystal display section (i.e., an LCD: Liquid-Crystal Display) 124.

The storage section 150 has RAM (i.e., Random Access Memory) 151 serving as internal memory; ROM (i.e., Read-Only Memory) 152 storing an automatic operation program 153; a memory interface 154; and a memory card (i.e., card-type memory) 155 which is auxiliary memory used while being removably incorporated into a housing of the portable radio telephone terminal.

Respective sections of Fig. 1 are interconnected by means of a system bus (i.e., a BUS) and can exchange a signal and information with each other.

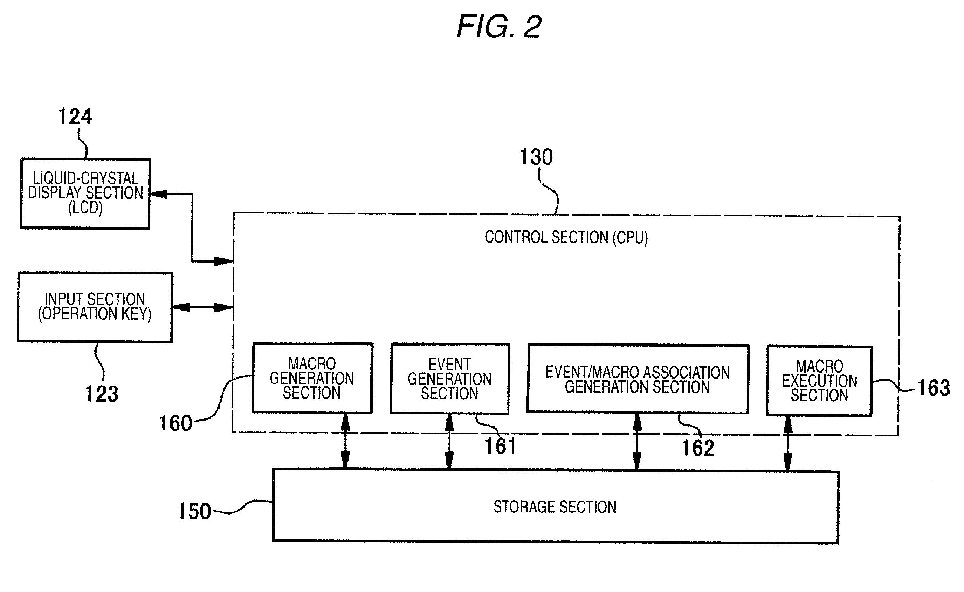

Fig. 2 is a system block diagram showing the configuration of a functional block required to implement a macro function in a portable radio telephone terminal shown in Fig. 1. In Fig. 2, sections common to those shown in Fig. 1 are assigned the same reference numerals. The macro function is for automatically executing, in response to occurrence of an actual event, processing of the portable radio telephone terminal according to a series of operation procedures represented by a macro corresponding to the event as a result of an event (e.g., acceptance of a call, arrival of an electronic mail, opening/closing of the housing of the portable radio telephone terminal, a display of a necessity of recharging, and the like) and a macro (i.e., information showing a series of operation procedures of the portable radio telephone terminal) being registered in an associated manner.

As shown in Fig. 2, the control section (CPU) 130 includes as the previously-described functional blocks, a macro generation section 160, an event generation section 161, an event/macro association generation section 162, and a macro execution section 163. These functional blocks are macro function sections provided in the control section (CPU) 130 in such a way that the control section (CPU) 130 and peripheral hardware operate in accordance with the automatic operation program 153 (see Fig. 1) recorded in the ROM 152.

The macro generation section 160 starts operation under the impetus of operation performed by the user of the portable radio telephone terminal for commencing generation of a macro (specifically, selection of a macro generation menu, depression of a macro generation button, selection of a macro generation shortcut, and the like).

Specifically, the macro generation section 160 of the control section (CPU) 130 is called under the impetus of the above-described user's operation.

The macro generation section 160 generates a macro in accordance with a predetermined algorithm (this operation will be described later); in other words, the user inputs a series of desired operations by way of the input section 123 (an operation key). Information about the input is sent to the macro generation section 160 of the control section (CPU) 130.

The macro generation section 160 replaces a history pertaining to the series of input operations with a recordable macro expression (i.e., generates a macro), and records the generated macro into the storage section 150 (specifically, the RAM 151 or the memory card 155).

The event generation section 161 starts operation under the impetus of predetermined user's operation (specifically, generation of an event, selection of a menu, depression of an event generation button, selection of an event generation shortcut, and the like).

Namely, the event generation section 161 of the control section (CPU) 130 is called under the impetus of the previously-mentioned user's operation. The event generation section 161 generates an event by use of a trigger event generation algorithm (which will be described later).

An event capable of providing an impetus to perform macro processing is preset in the RAM 151 (see Fig. 1) of the portable radio telephone terminal. A list of event candidates is displayed on the liquid-crystal display section (LCD) 124. The user selects one event (i.e., defines a trigger event) which provides an impetus for (a trigger for) execution of macro processing by means of operating the input section (an operation key) 123.

Information about the defined trigger event is sent to the event generation section 161 of the control section (CPU) 130.

The event generation section 161 replaces the trigger event defined by the user with a recordable internal expression (which will be described later), and records the internal expression into the storage section 150 (specifically, the RAM 151 or the memory card 155).

The event/macro association generation section 162 starts operation under the impetus of user's predetermined operation (concretely, selection of an event/macro association generation menu, depression of an event/macro association generation button, selection of an event/macro association generation shortcut, and the like).

Specifically, when the user has performed the above operation, the event/macro association generation section 162 of the control section (CPU) 130 is called.

The event/macro association generation section 162 generates an association between a macro and an event, by use of an algorithm (which will be described later) for generating association of an event with a macro.

Specifically, the user defines an association of an event with a registered macro, and inputs information about the definition of the association by operating the input section (an operation key) 123.

Information about the definition of the association is imparted to the event/macro association generation section 162 of the control section (CPU) 130.

The event/macro association generation section 162 replaces the information about the definition of the association between the event and the macro with a recordable internal expression (which will be described later), and records the internal expression into the storage section 150 (specifically, the RAM 151 or the memory card 155).

The macro execution section 163 automatically performs corresponding macro processing under the impetus of an event. In contrast with the case of the related art, in an instance of occurrence of a predetermined event, appropriate macro processing is automatically commenced without a user's command to perform macro processing, so that a series of operation are automatically performed.

Specifically, an event (opening or closing of a housing of the portable radio telephone terminal of collapsible type) is detected by the hall element (an open-and-close detection section) 140, and a result of detection is sent to the control section (CPU) 130 by way of the system bus (BUS). The macro execution section 163 of the control section (CPU) 130 detects occurrence of the event.

First, the macro execution section 163 determines whether or not the detected event is an associated event. When the event corresponds to an event registered, in the storage section 150, as pairing up with a macro, the macro registered in an associated manner is called from the storage section 150, and processing of the macro is executed.

When a macro associated with that event is not present, ordinary processing set in the portable radio telephone terminal so as to operate in synchronism with an event is performed.

Processing procedures of respective functional blocks will be described hereunder specifically.

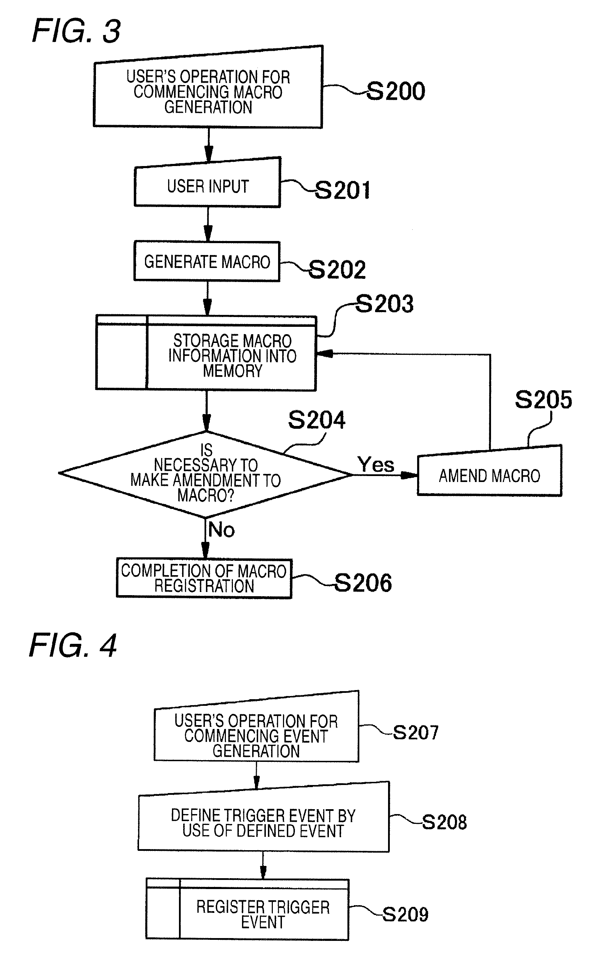

Fig. 3 is a flowchart showing procedures under which the macro generation section automatically generates a macro.

As shown in Fig. 3, the user performs operation for commencing macro generation (i.e., step S200), thereby selecting execution of automatic generation of a macro. The macro generation section 160 is called, and processing for executing a macro generation algorithm is initiated.

The user actually performs a round of key operations, and information about the history of the operations is consecutively input into the portable radio telephone terminal (i.e., step S201). The macro generation section 160 consecutively replaces the operations performed by the user into a macro, to thus generate a macro (i.e., step S202); and stores the generated macro into the storage section 150 (i.e., step S203).

Next, the macro generation section 160 prompts the user to ascertain specifics of the macro (ascertain whether there is a necessity for making an amendment) (i.e., step S204). When the user has determined that an amendment is necessary (that is, when "Yes" is selected in step S204), an amendment is made to the macro (i.e., step S205). Finally (that is, when "No" is selected in step S204), the macro is registered in the storage section 150, and registration of the macro is completed (i.e., step S206).

Fig. 4 is a flowchart showing procedures under which the event generation section generates a trigger event.

First, the user has performed operation for initiating generation of an event (i.e., step S207), whereupon the event generation section 161 is activated, and processing for executing an event generation algorithm is started. Specifically, the user defines an event which is to trigger execution of macro processing (i.e., step S208), through use of an event (i.e., a defined event) preset in the storage section 150.

The event generation section 161 replaces the definition of the event which is to serve as a trigger with a recordable format, and registers trigger event information acquired through replacement into the storage section 150 (i.e., step S209).

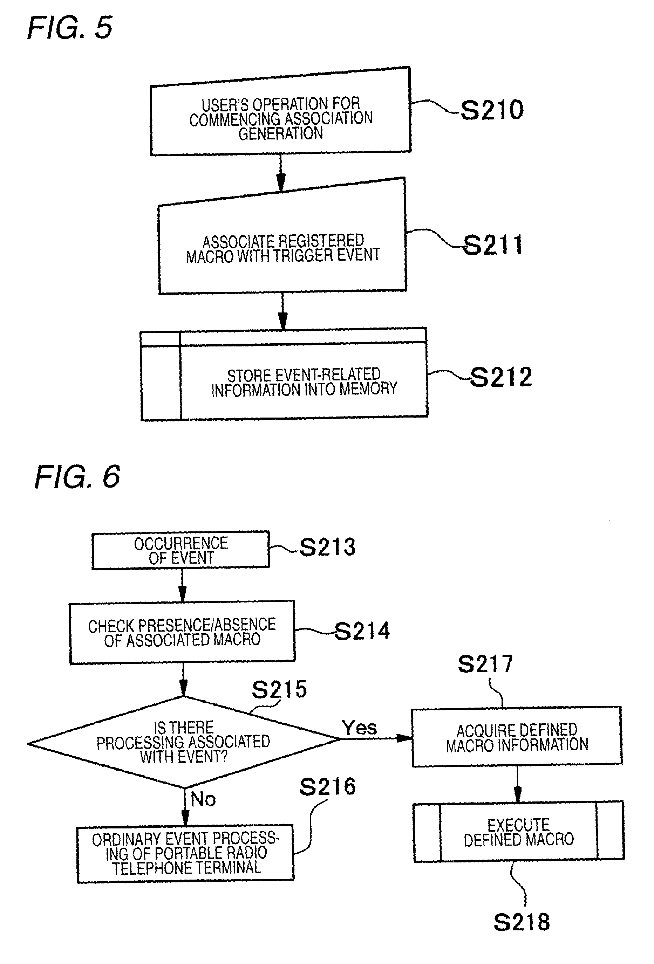

Fig. 5 is a flowchart showing processing procedures under which the event/macro association generation section associates an event with a macro.

First, the user performs operation for starting generation of an association between an event and a macro (i.e., step S210), whereupon the event/macro association generation section 162 is called, and processing for executing an event/macro association algorithm is initiated.

Herein, the user associates a trigger event with a macro desired to be executed at the time of occurrence of that event in a paired manner, by use of the macro and the event which have been defined and are registered in the storage section 150 (i.e., step S211).

Association information about association of the trigger event with a macro is replaced with a recordable format, and the format is stored (registered) in the storage section 150 (i.e., step S212).

Fig. 6 is a flowchart showing procedures under which a macro execution section automatically performs macro processing associated with an event.

In contrast with a related-art algorithm, the algorithm of this portable radio telephone terminal for performing macro processing does not require the user to perform input operation particularly. Macro processing is automatically executed with the impetus of occurrence of an event. Therefore, the algorithm is characterized in that a burden on the user does not arise.

When an event has arisen (i.e., step S213), the control section (CPU) 130 performs processing for accepting the event. Subsequently, the macro execution section 163 is activated, to thus start processing.

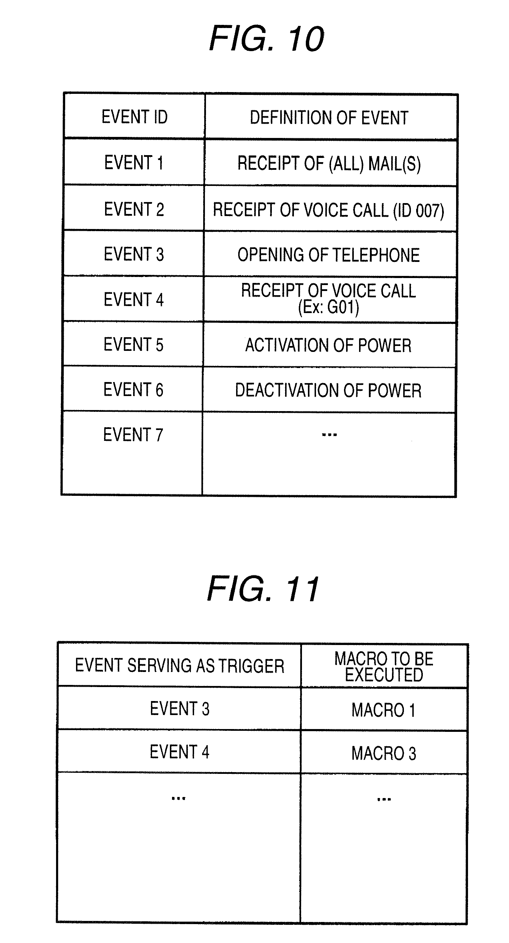

The macro execution section 163 checks whether or not there is a macro associated with the occurred event (i.e., step S214). Namely, the occurred event is checked against the information about an association between an event and a macro (e.g., table information to be described later, such as that shown in Fig. 11) stored in the storage section 150, thereby determining whether or not a macro associated with that event is present.

When a macro associated with the event is not present (that is, when "No" is selected in step S215), the control section (CPU) 130 performs ordinary event processing of a portable radio telephone terminal (i.e., processing set so as to be performed in response to an event when macro processing associated with the event is not performed) (i.e., step S216).

When a macro associated with the event is determined to be present in S215 (that is, when "Yes" is selected in step S215), the macro is read from the storage section 150; defined macro information is acquired (i.e., step S217); and macro processing is executed (i.e., step S218).

Next, there will be specifically described an example event table preset in the storage section and an example where a predetermined trigger event (herein operation for opening the housing of the portable radio telephone terminal of collapsible type) is defined by use of the event table.

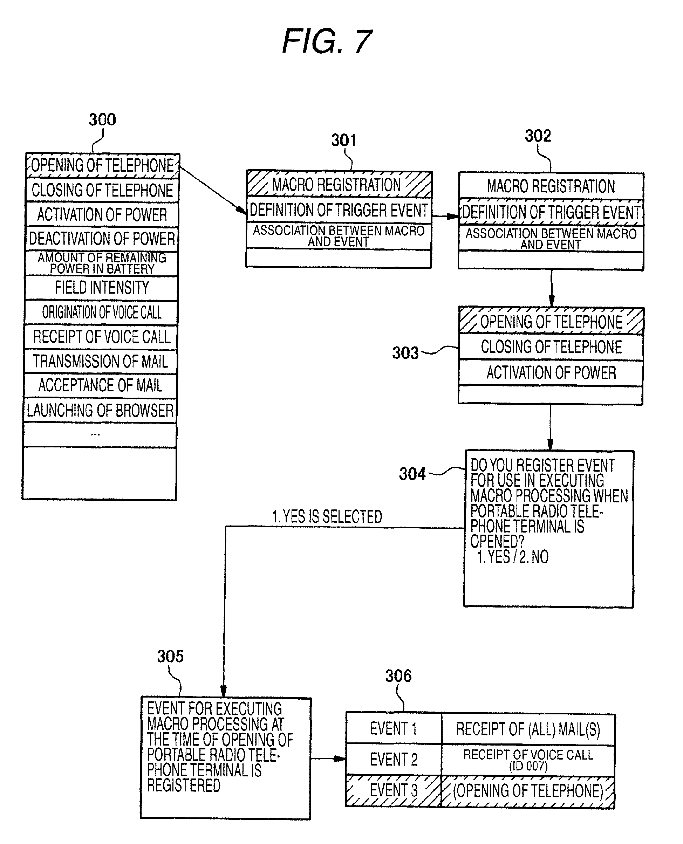

Fig. 7 is a view for describing an example event table preset in the storage section and processing procedures for a case where a predetermined trigger event (herein operation for opening the housing of the portable radio telephone terminal of collapsible type) is defined by use of the event table.

Reference numeral 300 shown in the left side of Fig. 7 designates an event table preset in the storage section 150.

An event table 300 includes event specifics, such as opening of a telephone, closing of the telephone, activation of power, deactivation of power, the remaining power in a battery, field intensity, origination of a voice call, receipt of a voice call, transmission of a mail, arrival of a mail, start of a browser, and the like.

Herein, an event "Open a telephone (open a housing of a portable radio telephone terminal of collapsible type)" is called from preset events, and the called event is utilized.

Procedures for a case where an event "Open a telephone (open a housing of a portable radio telephone terminal of collapsible type)" is defined as a trigger event will be specifically described hereunder. Reference Numerals 301 through 305 in Fig. 7 designate an example screen display appearing on the liquid-crystal display section (LCD) 124, and reference numeral 306 designates an event table to be registered in the storage section 150.

First, the control section (CPU) 130 displays on the liquid-crystal display section (LCD) 124 an initial menu 301 pertaining to an event and a macro.

Now, the user selects a menu of trigger event definitions. Reference numeral 302 designates a screen appearing in this state. In this case, the event generation section 161 is called, and processing for defining a trigger event is initiated.

During processing for defining a trigger event, a preset event is called from the storage section 150, and the thus-read event is displayed on the liquid-crystal display section (LCD) 124. The user operates an input section (operation key) 123, thereby selecting an event type. Reference numeral 303 designates a screen appearing in this state.

Subsequently, a screen 304 "Do you register an event for performing macro processing at the time of opening of the portable radio telephone terminal? 1. Yes/2. No" appears on the liquid-crystal display section (LCD) 124.

Herein, the user selects "1. Yes." In this case, a screen 305 "An event for performing macro processing at the time of opening of the portable radio telephone terminal has been registered" appears on the liquid-crystal display section (LCD) 124.

In Fig. 7, an auxiliary definition menu is displayed according to the type of an event. However, in the case of an event "Open a portable radio telephone terminal," a check is made solely as to whether to register the definition, without making a special, auxiliary definition. When this simple event "Open a portable radio telephone terminal" has been defined, specifics pairing an event ID (i.e., an identification number) with an internal expression of the event are recorded in the storage section 150.

In the event table 306 shown in a lower right portion of Fig. 7, "Arrival of a mail (ALL: meaning nonspecification of a call originator) is defined as Event 1; "Originate a voice call (ID007: meaning receipt of a voice call from a person assigned ID7)" is defined as Event 2; and "Open a telephone (operation for opening a housing of a portable radio telephone terminal of collapsible type)" is defined as Event 3.

Events 1 through 3 show a sequence of registration. Specifically, when an event is registered thirdly, an ID is "Event 3," and an internal expression (i.e., a defined event) of that event corresponds to "Open a telephone."

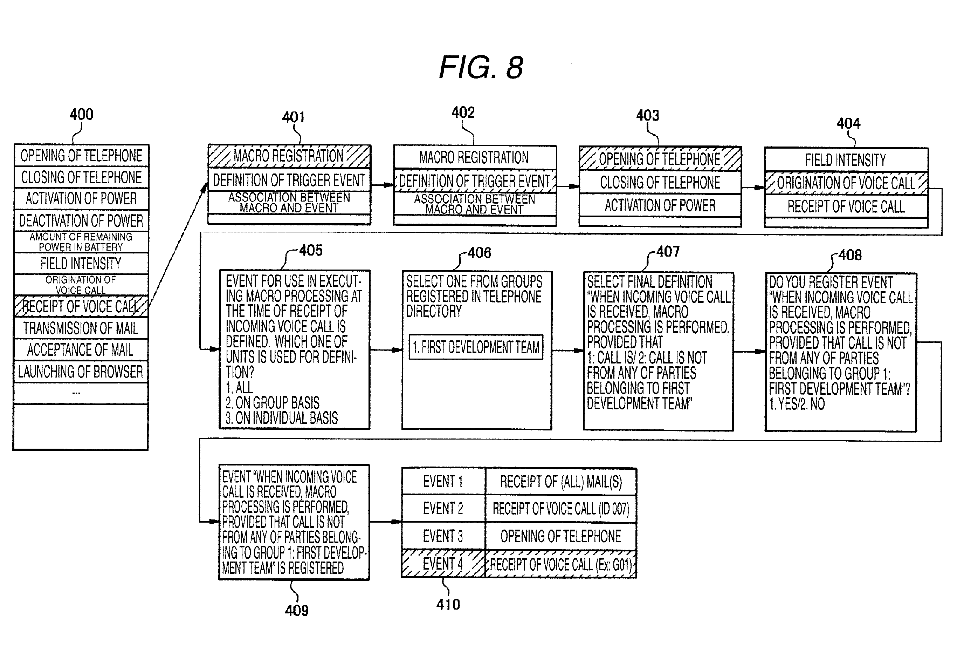

Procedures for a case where "Receipt of a phone call from a party other than the parties registered in Telephone Directory Group 1" is defined as a trigger event will now be described specifically by reference to Fig. 8.

Fig. 8 is a view for describing an example event table preset in the storage section and processing procedures performed when a predetermined trigger event (herein receipt of a telephone call from a party other than the parties registered in Telephone Directory Group 1) is defined by use of the event table.

Reference numeral 400 of Fig. 8 shows an event table preset in the storage section 150.

The event table 400 includes event specifics, such as opening of a telephone, closing of the telephone, activation of power, deactivation of power, the amount of power remaining in a battery, field intensity, origination of a voice call, receipt of a voice call, transmission of a mail, arrival of a mail, start of a browser, and the like. An event "Receipt of a voice call" is called from the preset events, and the called event is utilized.

Further, reference numerals 401 through 409 designate example screens displayed on the liquid-crystal display section (LCD) 124. Specifically, reference numeral 401 designates a screen of an initial menu, and reference numeral 402 designates a screen appearing in a state where the user has selected trigger event definition processing. Reference numeral 403 designates an initial menu screen of trigger event definition processing, and reference numeral 404 designates a screen appearing when the user has selected an event definition relevant to receipt of a voice call.

Reference numeral 405 designates an incoming voice call event definition screen (a first stage); 406 designates an incoming voice call event definition screen (a second stage); 407 designates an incoming voice call event definition screen (a third (final) stage). Reference numeral 408 designates a screen for ascertaining registration and definition of an incoming voice call event definition, and 409 designates a screen for ascertaining registration of an incoming voice call event definition. Reference numeral 410 designates an example even table registered in the storage section 150.

In Fig. 8, an initial menu screen 401 is first displayed on the liquid-crystal display section (LCD) 124. The user operates an input section (an operation key) 123, to thus select a menu of trigger event definitions (see the screen 402). Thereby, the event generation section 161 is called, and trigger event definition processing is commenced.

In the menu of trigger event definitions, the event table preset in the storage section 150 is first called and displayed (see the screen 403).

Next, the user selects an event type (see the screen 404). In Fig. 8, a menu of auxiliary definitions is displayed according to the type of an event. An event "Receipt of a voice call (receipt of a call of voice conversation) is selected, and auxiliary definitions are consecutively made hereinbelow.

First, making a determination on a "per-group basis" is selected (see the screen 405), and the group is selected as being "First development team of Telephone Directory Group 1" (see Fig. 406).

Specifically, "receipt of a call from a party other than the parties belonging to the first development team of Group 1" is defined as a trigger event (see the screen 407), and the trigger event is registered in the storage section 150 of the portable radio telephone terminal (see the screen 408). A screen for use in ascertaining registration of the definition of receipt of a voice call is displayed (see the screen 409).

Thereby, registration of an event "at the time of receipt of a phone call from a party other than the parties registered in Telephone Directory Group 1" is completed. In this case, specifics pairing an ID of the event with an internal expression of the event are recorded in the storage section 150.

Now, registration of the event is assumed to have been performed subsequent to registration of the event in the event table shown in Fig. 7. In this case, the event is registered fourthly; an ID assumes "Event 4"; and an internal expression of the event assumes "Receipt of a voice call (Ex: G01)."

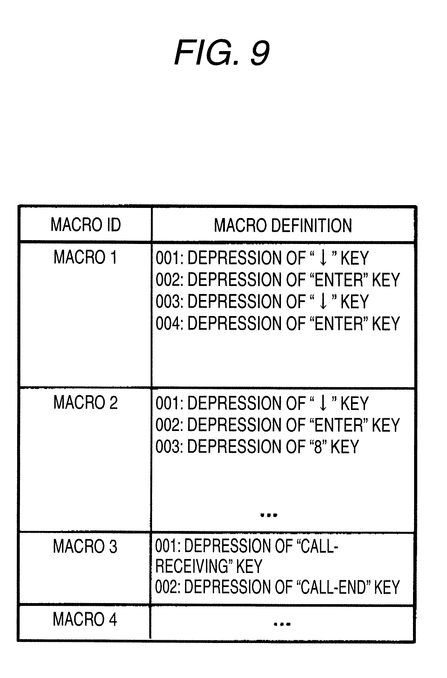

Specifics of a macro table to be registered in the storage section 150 will now be described. Fig. 9 is a view showing an example macro table to be registered in the storage section 150.

A macro is automatically generated by the macro generation section 160 in accordance with the algorithm shown in Fig. 3 that has been previously described, and the generated macro is registered in the storage section 150.

As shown in Fig. 9, a macro ID for management purpose (on the left side of the table) and an internal expression of a macro definition (on the right side of the table) are stored and managed as a pair in the storage section 150.

As described previously, the internal expression of the macro definition (on the right side of the table) is formed from information about the history of continuous key operations.

Specifics of the trigger event table to be registered in the storage section 150 are now described. Fig. 10 is a view showing an example trigger event table to be registered in the storage section.

As descried previously, the trigger event is generated by the event generation section 161 in accordance with the algorithm shown in Fig. 4. As shown in Fig. 10, the event ID for management purpose (on the left side of the table) and the internal expression of the event (on the right side of the table) are stored and managed as a pair in the storage section 150.

Specifics of the event/macro association table to be registered in the storage section 150 are now described. Fig. 11 is a view showing an example event/macro association table corresponding to information to be registered in the storage section 150.

As mentioned previously, an association between an event and a macro is generated by the event/macro association generation section 162 in accordance with the algorithm shown in Fig. 5.

As shown in Fig. 11, an event ID which is to serve as a trigger (on the left side of the table) and a macro ID to be executed by the event (on the right side of the table) are stored and managed as a pair in the storage section 150.

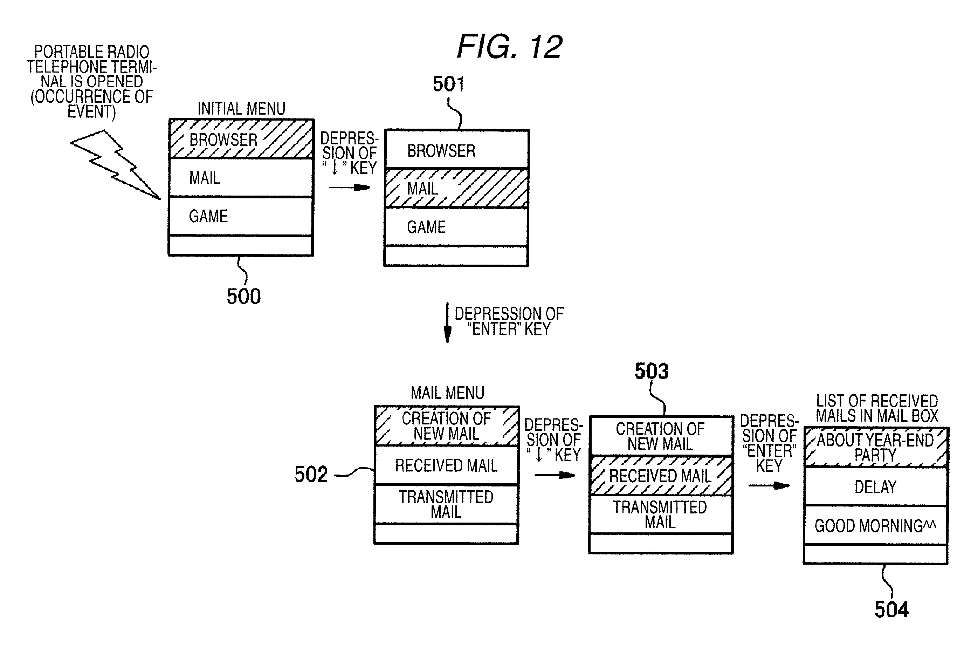

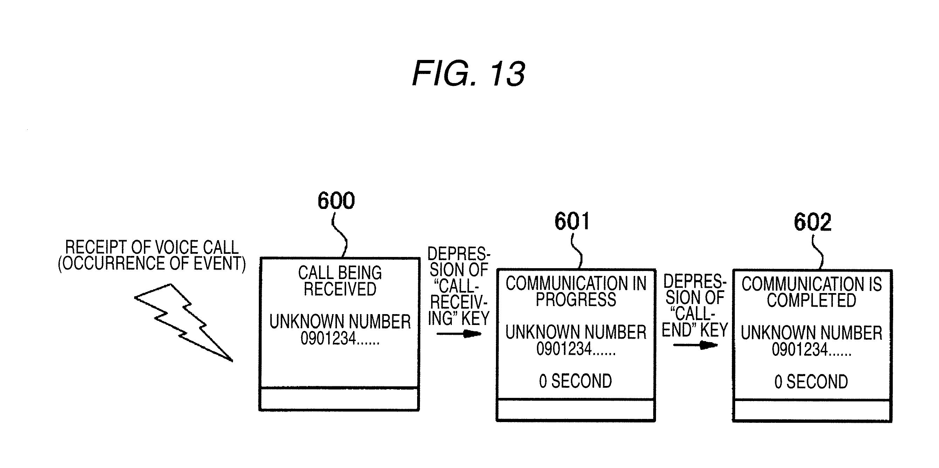

Principal procedures performed when macro processing is automatically performed with the impetus of an event will next be described by use of two specific examples (see Figs. 12 and 13).

Fig. 12 is a view for describing principal procedures employed in example automatic execution of macro processing (specifically an example of automatic display of a list of received mails at the time of opening of the portable radio telephone terminal).

As shown in Fig. 11, Event 3 (i.e., opening of a telephone) is associated with the event/macro association table, and Macro 1 (i.e., procedures of a round of key operations to be performed for displaying a list of received mails) is registered. Accordingly, a round of key operations to be performed for displaying a list of received mails are automatically performed with the impetus of user's action of opening the housing of the portable radio telephone terminal of collapsible type.

In more detail, when the user opens the housing of a portable radio telephone terminal of collapsible type, an initial menu screen 500 is displayed on the liquid-crystal display section (LCD) 124, and a down key is automatically depressed, whereby a mail application is automatically selected (see the screen 501).

Subsequently, the mail application is launched as a result of automatic depression of an Enter key, and a display shifts to a mail menu screen (see the screen 502). Next, received mail processing is selected as a result of automatic depression of the down key (see the screen 503). Subsequently, the Enter key is automatically depressed, and a received mail is stored in a mail box, and a list of received mails is automatically displayed on the liquid-crystal display section (LCD) 124 (see the screen 504).

In this case, processing pertaining to the specifics of the portable radio telephone terminal is as follows.

Specifically, the hall element (the open-and-close detection section) 140 detects opening or closing of the housing and sends a detection signal to the control section (CPU) 130.

The control section (CPU) 130 detects an event "Portable radio telephone terminal has been opened," and commences processing corresponding to the event.

The macro execution section 163 of the control section (CPU) 130 initially makes a determination of the event in accordance with the algorithm shown in Fig. 6.

The macro execution section 163 next checks the current event against the event/macro association table shown in Fig. 11, thereby determining that the current event (i.e., the portable radio telephone terminal has been opened) coincides with Event 3, and processing proceeds to execution of macro processing. Since the macro to be executed is Macro 1, the macro execution section 163 reads Macro 1 from the storage section 150.

The macro execution section 163 performs a round of operations of the portable radio telephone terminal represented by Macro 1. As shown in Fig. 12, the macro execution section 163 automatically shifts the screen in accordance with the key operation procedures of Macro 1, thereby displaying a list of received mails.

As mentioned above, when the portable radio telephone terminal is opened, a list of received mails is displayed without user's performance.

The present invention enables customization of an event and corresponding key operation in accordance with a user's preference. Specifically, the portable radio telephone terminal can be programmed and individualized in accordance with the user's preference, and hence the convenience of the portable radio telephone terminal is enhanced to a much greater extent.

Fig. 13 is a view for describing principal procedures of another example of automatic execution of macro processing (specifically, an example where a phone call from a party other than business-related parties is received and hung up instantaneously as measures against a one-ring phone scam).

When Event 4 has arisen (when a phone call from a party other than parties included in Telephone Directory Group 1 has been received), a round of key operations for instantaneously receiving and hanging up the phone call is automatically performed.

In the case of this example, there can be realized a user's original sleep mode; for instance, "a counteractive action of instantaneously receiving and hanging up phone calls, while the user is in bed, from one-ring phone scammers is desired to be automatically taken, but receipt of an urgent business call is desired."

In Fig. 13, when a voice call has been received and the originator of that call is a party other than the parties included in Phone Directory Group 1 (i.e., an unknown phone number), a voice call receipt screen 600 is displayed on the liquid-crystal display section (LCD) 124, and a phone-receiving key is automatically depressed, and a communication screen 601 momentarily appears. Immediately after the display of the communication screen, a call-ending key is automatically depressed, whereupon a communication end screen 602 appears.

In this case, processing procedures performed in the portable radio telephone terminal are as follows.

First, the control section (CPU) 130 detects an event called "Receipt of a voice call" and commences processing corresponding to the event.

The macro execution section 163 of the control section (CPU) 130 first determines the event in accordance with the algorithm shown in Fig. 6.

Specifically, the event "receipt of a voice call (i.e., receipt of a call from an unknown phone number)" is checked against the event/macro association table in Fig. 11. Event 4 is determined to coincide with "at the time of receipt of a voice call from a party other than the parties of Group 1," and processing proceeds to macro processing. A macro to be performed at this time is Macro 3. Therefore, the macro execution section 163 reads Macro 3 from the storage section 150. The macro execution section 163 then performs a round of operations of the portable radio telephone terminal represented by Macro 3.

The macro execution section 163 automatically repeats such a round of key operations as shown in Fig. 13, to thus be able to perform processing for instantaneously receiving and hanging up a call without posing a burden on the user. Thus, processing for "instantaneously receiving and hanging up a phone call from a party other than the business-related parties" is realized.

Thus, according to the present invention, processing corresponding to an event can be customized in accordance with a user's usage scene, whereby user's convenience is enhanced to a much greater extent.

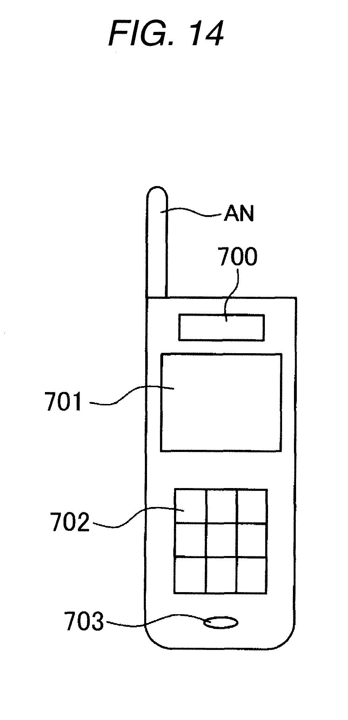

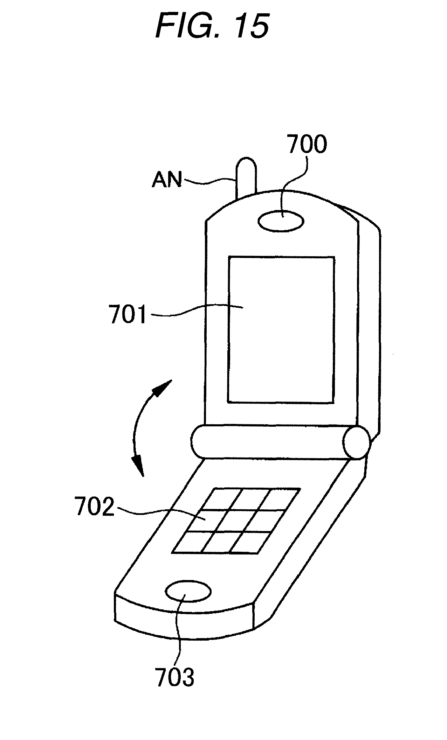

Fig. 14 is a front view showing an example external configuration of a portable radio telephone terminal (straight type) for automatically performing macro processing with an impetus of an event. Fig. 15 is a perspective view showing an example external configuration of a portable radio telephone terminal (of collapsible type) having a function of automatically performing a macro with an impetus of an event.

The portable radio telephone terminal shown in Figs. 14 and 15 has an antenna AN, a speaker 700, a liquid-crystal display 701, an operation key 702, and a receiver 703.

There is no small number of cases where the user feels a round of key operations laborious as a result of recent expansion of functionality of the portable radio telephone terminal. Alternatively, the portable radio telephone terminal can be carried everywhere, and hence inconveniences, such as bother about spam mails or the user being summoned irrespective of scenes, arise very frequently.

In the portable radio telephone terminal of the present invention shown in Figs. 14 and 15, a macro and an event are freely associated with each other in the portable radio telephone terminal, and a variety of macro processing operations can be automatically performed in accordance with a usage scene (i.e., unrestricted programming of a macro in the portable radio telephone terminal), and operation optimum for a usage scene can be readily performed without imposing a burden on the user. The portable radio telephone terminal can also be customized freely in accordance with the user. Thereby, the use value of the portable radio telephone terminal is enhanced.

As has been described above, according to the present embodiment, a round of operations of the portable radio telephone terminal desired by the user can be immediately performed in accordance with the scene of the user utilizing the portable radio telephone terminal, without imposing a burden on the user. Unrestricted customization of a macro function becomes feasible, so that the user's convenience is improved.

Further, according to the present embodiment, the convenience of the portable radio telephone terminal is enhanced.

According to the present embodiment, a macro and an event are freely associated with each other in the portable radio telephone terminal, and a wide variety of macro processing operations (i.e., unrestricted programming of a macro in the portable radio telephone terminal) can be performed according to a use scene. Consequently, the portable radio telephone terminal can be individualized (i.e., customized) according to the user, so that the ease of use of the portable radio is enhanced.

As mentioned above, according to the present embodiment, the ease of use of a macro function is improved to a much greater extent, and the burden on the user imposed as a result of operation of the portable radio telephone terminal is lessened.

In the previously-described embodiments, an event/macro association table, such as that shown in Fig. 11, is adopted as an example of event/macro association information. However, the even/macro association information is not limited to the table. Needless to say, the information may also be information formed by utilization of a map or a list of an STL (Standard Template Library) or the like.

Although the present invention has been described in detail by reference to the specific embodiment, it is obvious to those skilled in the art that the present invention is liable to various alterations or amendments without departing the spirit and scope of the present invention.

The present invention is based on Japanese Patent Application (JP-A-2005-095427) filed on March 29, 2005 in Japan, the contents of which are hereby incorporated by reference.

### <Industrial Applicability>

The present invention poses a light burden on the user during performance of macro processing and provides significantly-improved ease of use of a macro function, and hence is useful for a portable terminal.

## Claims

1. A portable terminal having a macro function, comprising:
a storage section;
a macro generation section which generates a macro as information showing a round of operation procedures of the portable terminal and which registers the macro into the storage section;
an event generation section which generates an event serving as an impetus for the round of operation procedures and which store the event into the storage section;
an event/macro association generation section for generating event/macro association information for use in associating the registered event with the macro and registering the event/macro association information into the storage section; and
a macro execution section for, when the registered event has arisen, automatically executing a round of operation corresponding to the event by reference to the event/macro association information.

2. The portable terminal according to claim 1, wherein the storage section is internal memory of the portable terminal or auxiliary memory removably attached to the portable terminal.

3. A portable radio telephone terminal corresponding to the portable terminal defined in claim 1 or 2.

## Amended claims

### Amended claims under Art. 19.1 PCT

**1.** A portable terminal having a macro function, comprising:
a storage section;
a macro generation section which generates a macro as information showing a round of operation procedures of the portable terminal and which registers the macro into the storage section;
an event generation section which generates an event serving as an impetus for the round of operation procedures and which store the event into the storage section;
an event/macro association generation section for generating event/macro association information for use in associating the registered event with the macro and registering the event/macro association information into the storage section; and
a macro execution section for, when the registered event has arisen, automatically executing a round of operation corresponding to the event by reference to the event/macro association information.

**2.** (Amended)
The portable terminal according to claim 1, further comprising:
a radio processing section, performing a radio communication;
wherein the event is an incoming processing which includes at least a receipt of a voice call and a receipt of an electronic mail by the radio processing section.

**3.** (Amended)
The portable terminal according to claim 1, further comprising:
a radio processing section, performing a radio communication;
wherein the event is a transmitting processing which includes at least an origination of a voice call and a transmission of an electric mail by the radio processing section.

**4.** (Added)
The portable terminal according to claim 1, further comprising:
a radio processing section, performing a radio communication;
wherein the event is based on a filed intensity utilized in the radio communication of the radio processing section.

**5.** (Added)
The portable terminal according to claim 1, wherein the event is that the portable terminal is changed from a certain shape to another shape.

**6.** (Added)
The portable terminal according to claim 1, wherein the event is that a plurality of foldable housings which constitute the portable terminal are changed to an opening state or closing state.

**7.** (Added)
The portable terminal according to claim 1, further comprising:
a power supply, supplying a power consumed by the portable terminal;
wherein the event is a start or stop of a power supply by the power supply to the portable terminal.
(Added)

**8.** The portable terminal according to claim 1, further comprising:
a power supply, supplying a power consumed by the portable terminal;
wherein the event is based on an amount of power remaining in the power supply.
(Added)

**9.** The portable terminal according to any one of claims 1 to 8, wherein the storage section is internal memory of the portable terminal or auxiliary memory removably attached to the portable terminal.
(Added)

**10.** A portable radio telephone terminal corresponding to the portable terminal defined in any one of claims 1 to 9.
